(19) **Europäisches Patentamt**
**European Patent Office**
**Office européen des brevets**

(11) **EP 2 544 135 A1**

(12) **EUROPEAN PATENT APPLICATION**

(43) Date of publication:
**09.01.2013 Bulletin 2013/02**

(51) Int Cl.:
**G06Q 10/06** (2012.01)

(21) Application number: **12175026.9**

(22) Date of filing: **04.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.07.2011 US 201113176236**

(71) Applicant: **The Boeing Company**
**Chicago, IL 60606-2016 (US)**

(72) Inventors:
• **Wang, Haiqin**
**Redmond, WA 98052 (US)**

• **Wang, Guijun**
**Issaquah, WA 98029 (US)**
• **Arroyo, Sharon F.**
**Sammamish, WA 98075 (US)**
• **Rencher, Robert J.**
**Normandy Park, WA 98166 (US)**
• **Tjelle, James P.**
**Bellevue, WA 98006 (US)**

(74) Representative: **Howson, Richard G.B. et al**
**Kilburn & Strode LLP**
**20 Red Lion Street**
**London WC1R 4PJ (GB)**

(54) **A system and methods for modeling and analyzing quality of service characteristics of federated cloud services in an open eco-system**

(57) A system and methods for modeling and analyzing Quality of Service (QoS) characteristics of federated cloud services in an open eco-system is disclosed. A plurality of system entities of a federated service system are identified, and each of the system entities is classified to provide a plurality of entity classifications. A plurality of inter-entity relationships of the system entities are identified, and each of the inter-entity relationships is classified as a primitive model to provide a plurality of inter-entity relationship classifications. A composite model of the federated service system comprising the system entities, the entity classifications, the inter-entity relationships, and the inter-entity relationship classifications is generated.

FIG. 1

EP 2 544 135 A1

## Description

## FIELD

Embodiments of the present disclosure relate generally to internet cloud services. More particularly, embodiments of the present disclosure relate to internet cloud services quality of service in an open eco-system.

## BACKGROUND

A federated eco-system is a system of systems, where systems are defined as a federated set of services. These interactive services represent a complex tiered provider-consumer relationship. A federated eco-system involves several participants such as system integrators, service suppliers, consumers, and regulators. Early examples of federated eco-systems are Internet portals providing an integrated approach to accessing services. In the aviation industry, for example, a commercial aviation service can be a federation of services principally provided by an airplane manufacturer with additional services from government agencies such as the United States Federal Aviation Administration (US FAA) and the European Union European Aviation Safety Agency (EU EASA), airlines, suppliers, and information system vendors. Today's major web portals are generally federated eco-systems of content providers, vendors, advertisers, supporting services, and consumers.

For example, travel management services are generally federated cloud services (services) that comprise airline reservation systems, hotel and rental car reservation systems as well as advertisers. Additional supporting services may comprise maps, weather, and local information. The evolution of these integrated services as a federated eco-system (open eco-system) has increased the complexity of the relationships between the services. A cloud computing environment for these services increases a challenge of understanding and managing Quality of Service (QoS) characteristics in performance, reliability, availability, scalability, security, information assurance, and cost.

## SUMMARY

A system and method for modeling and analyzing Quality of Service (QoS) characteristics of federated cloud services in an open eco-system is disclosed. A plurality of system entities of a federated service system are identified, and each of the system entities is classified to provide a plurality of entity classifications. A plurality of inter-entity relationships of the system entities are identified, and each of the inter-entity relationships is classified as a primitive model to provide a plurality of inter-entity relationship classifications. A composite model of the federated service system comprising the system entities, the entity classifications, the inter-entity relationships, and the inter-entity relationship classifications is generated. The QoS characteristics of the federated cloud services are derived and evaluated.

In this manner, a network service provider can understand an economic benefit of hosting a service in network clouds, and choose a host service, which can operate with desired QoS characteristics. The QoS characteristics may comprise, for example but without limitation, a smaller service time, and the like, when providing an intended service to end-users of the federated cloud services in the open eco-system. Smaller service time can translate to optimized utilization of a given network and reduced cost for the network service providers. Thereby, network service providers can optimize revenue while providing an excellent end-user experience.

In an embodiment, a method for modeling and analyzing Quality of Service (QoS) characteristics of federated cloud services in an open eco-system identifies a plurality of system entities of a federated service system. The method further classifies each of the system entities to provide a plurality of entity classifications. The method further identifies a plurality of inter-entity relationships of the system entities, and classifies each of the inter-entity relationships as a primitive model to provide a plurality of inter-entity relationship classifications. The method also generates a composite model of the federated service system comprising the system entities, the entity classifications, the inter-entity relationships, and the inter-entity relationship classifications.

In another embodiment, a Quality of Service (QoS) characteristics modeling and analysis system for federated cloud services comprises a system entity identification module, an inter-entity relationship identification module, a classification module, and a compositing module. The system entity identification module is operable to identify a plurality of system entities of a federated service system. The inter-entity relationship identification module is operable to identify a plurality of inter-entity relationships of the system entities. The classification module is operable to classify each of the system entities to provide a plurality of entity classifications. The classification module is further operable to classify each of the inter-entity relationships as a primitive model to provide a plurality of inter-entity relationship classifications. The compositing module is operable to generate a composite model of the federated service system comprising the system entities, the entity classifications, the inter-entity relationships, and the inter-entity relationship classifications.

In yet another embodiment, a computer readable storage medium comprises computer-executable instructions for performing a method for modeling and analyzing Quality of Service (QoS) characteristics of federated cloud services in an open eco-system. The method is executed by computer-executable instructions that identify a plurality of system entities of a federated service system, and classify each of the system entities to provide a plurality of entity classifications. The method is further executed by computer-executable instructions that identify a plurality of inter-entity relationships of the system entities, and classify each of the inter-entity relationships as a primitive model to provide a plurality of inter-entity relationship classifications. The method is further executed by computer-executable instructions that generate a composite model of the federated service system comprising the system entities, the entity classifications, the inter-entity relationships, and the inter-entity relationship classifications.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

## BRIEF DESCRIPTION OF DRAWINGS

A more complete understanding of embodiments of the present disclosure may be derived by referring to the detailed description and claims when considered in conjunction with the following figures, wherein like reference numbers refer to similar elements throughout the figures. The figures are provided to facilitate understanding of the disclosure without limiting the breadth, scope, scale, or applicability of the disclosure. The drawings are not necessarily made to scale.

Figure 1 is an illustration of an exemplary federated cloud service in an open eco-system.

Figure 2 is an illustration of exemplary service usage functional relationship primitive models according to an embodiment of the disclosure.

Figure 3 is an illustration of exemplary service usage temporal relationship primitive models according to an embodiment of the disclosure.

Figure 4 is an illustration of exemplary service connection relationship primitive models according to an embodiment of the disclosure.

Figure 5 is an illustration of exemplary service hosting relationship primitive models according to an embodiment of the disclosure.

Figure 6 is an illustration of an exemplary federated service system showing a composite model graph comprising a service decomposition of the federated service system using primitive models according to an embodiment of the disclosure.

Figure 7 is an illustration of an exemplary functional block diagram of a federated cloud services Quality of Service (QoS) characteristics modeling system according to an embodiment of the disclosure.

Figure 8 is an illustration of an exemplary flowchart showing a federated cloud services Quality of Service (QoS) characteristics modeling and analyzing process according to an embodiment of the disclosure.

Figure 9 is an illustration of an exemplary flowchart showing an evaluation and derivation process for calculating QoS characteristics of federated services in an open eco-system according to an embodiment of the disclosure.

## DETAILED DESCRIPTION

The following detailed description is exemplary in nature and is not intended to limit the disclosure or the application and uses of the embodiments of the disclosure. Descriptions of specific devices, techniques, and applications are provided only as examples. Modifications to the examples described herein will be readily apparent to those of ordinary skill in the art, and the general principles defined herein may be applied to other examples and applications without departing from the spirit and scope of the disclosure. The present disclosure should be accorded scope consistent with the claims, and not limited to the examples described and shown herein.

Embodiments of the disclosure may be described herein in terms of functional and/or logical block components and various processing steps. It should be appreciated that such block components may be realized by any number of hardware, software, and/or firmware components configured to perform the specified functions. For the sake of brevity, conventional techniques and components related to federated cloud services, open eco-systems, mathematical modeling, simulation, and other functional aspects of the systems (and the individual operating components of the systems) may not be described in detail herein. In addition, those skilled in the art will appreciate that embodiments of the present disclosure may be practiced in conjunction with a variety of hardware and software, and that the embodiments described herein are merely example embodiments of the disclosure.

Embodiments of the disclosure are described herein in the context of a practical nonlimiting application, namely, a cloud service. Embodiments of the disclosure, however, are not limited to such cloud service applications, and the techniques described herein may also be utilized in other applications. For example but without limitation, embodiments may be applicable to intranets, adhoc networks, sensor networks, and the like.

As would be apparent to one of ordinary skill in the art after reading this description, the following are examples and embodiments of the disclosure and are not limited to operating in accordance with these examples. Other embodiments may be utilized and structural changes may be made without departing from the scope of the exemplary embodiments of the present disclosure.

With the fast growth of cloud computing infrastructure, more and more services are hosted in a cloud computing system. At the same time, services from diverse enterprises are increasingly federated forming complex federated eco-systems. Services interact with other services and traverse clouds with tiered provider-consumer relationships. Understanding Quality of Service (QoS) characteristics of federated eco-systems is a critical concern for enterprises that desire to move their services into the cloud computing system. Conversely, designing a cloud computing system or a federated cloud system with required QoS characteristics is also critical to ensure the system provides intended services with minimal cost. Embodiments of the disclosure provide a system and methods for modeling and analyzing QoS characteristics of federated services of a federated system.

In an embodiment, a structure and relationships of various concepts are synthesized in a small number of primitive models as common patterns. The federated eco-system in clouds is modeled and analyzed recursively based on the primitive models. A framework of decomposition and derivation for understanding QoS characteristics of the federated services of the federated system from a user's perspective is provided.

Further, methods to evaluate, derive models, and analyze QoS performance for the federated system composed of many federated services are also provided. An embodiment starts with defining the primitive models building blocks that form the federated services in a cloud computing environment. Essential primitive models building blocks (e.g., computing node, network communication, service, etc.) and their basic functional and temporal relationships are then derived. Each of the primitive models building block considers a pattern of service request and provision in terms of functional and temporal relationships. Furthermore, each of the primitive models building block may have one or more mathematical expressions for calculating QoS characteristics of each of the primitive models building block, for example but without limitation, performance, cost, and the like. For analysis of derived QoS characteristics at the end-user's level, analytic, simulation, and step-wise evaluation and derivation approaches are provided.

In an embodiment the compositing module may recursively decompose the composite model into a composite model graph comprising the primitive models and representing the federated service system. The compositing module may define a workload model for the federated service system, where the root of the composite model graph represents a starting point of a workload imposed on the federated service system by an end user; and decomposes the workload recursively from a parent node to a child node.

In a further embodiment, computer-executable instructions for performing the method for modeling and analyzing Quality of Service (QoS) characteristics of federated cloud services in an open eco-system may be executed. The computer-executable instructions may for example identify a plurality of system entities of a federated service system; classify each of the system entities to provide a plurality of entity classifications; identify a plurality of inter-entity relationships of the system entities; classify each of the inter-entity relationships as a primitive model to provide a plurality of inter-entity relationship classifications; and generate a composite model of the federated service system comprising the system entities, the entity classifications, the inter-entity relationships, and the inter-entity relationship classifications. Further, the computer-executable instructions may recursively apply one or more primitive models to provide the composite model. The computer-executable instructions may also calculate QoS characteristics by applying an evaluation and derivation method to the composite model.

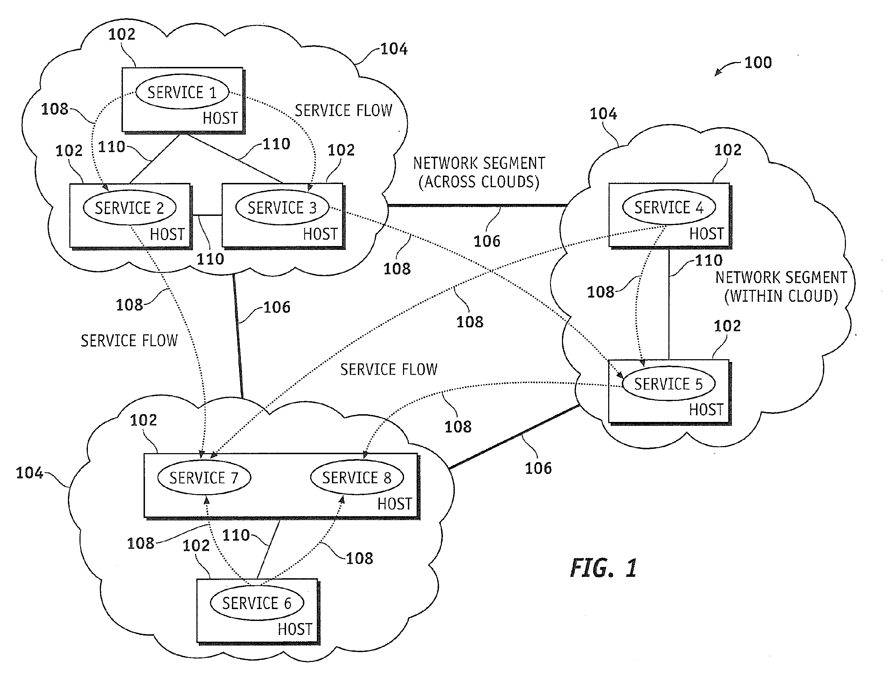

Figure 1 is an illustration of an exemplary federated cloud service 100 (service 100) in an open eco-system. The service 100 comprises a plurality of federated services 1-8 (services 1-8) hosted on a plurality of hosts 102 spread throughout a plurality of network clouds 104.

An information technology infrastructure supporting these federated cloud services is a complex set of systems that have been increasingly outsourced to service vendors in a cloud computing Infrastructure as a Service (IaaS) paradigm. A cloud computing environment makes the services 1-8, from infrastructure as a service to software as a service, virtual to their consumers. With cloud computing, information technology (IT) services are provided, consumed and delivered dynamically over the Internet through shared resources and shared software. Often, consumers utilize multiple services 1-8 provided through different network clouds 104. The information acquired from these different sources is derived in order to complete a mission with multiple information inquiry and manipulation tasks.

However, a behavior of such federated eco-system interactions is complicated by a syndication of information of the services 1-8. This syndication of services 1-8 establishes a multi-layer or hierarchical relationship of the network clouds 104 services. Understanding an economic benefit of hosting a service in the network clouds 104 and the QoS characteristics of hosted services such as the services 1-8 became a major concern for enterprises to move their service applications to a cloud such as the network clouds 104. A decision requires an effective modeling solution supported by mathematical methods to analyze, predict, and design a behavior of the (federated) services 1-8. Using rules-of-thumb such as moving an application to the network clouds 104 and using geographical nearby network clouds 104 may not give much insight about behavior of the federated eco-system and sometimes can be misleading.

From an end-user point of view, airline customers, for example, desire an excellent user experience in terms of fast response time, relevant content, reliable service, 7x24 availability from anywhere in the world at the best price point. Users may dynamically change their usage patterns and behaviors based upon the responsiveness of the services 1-8 selected. A utilization of cloud computing for the federated eco-system must deliver the expected service performance in user experience under various load and location conditions in terms of the QoS characteristics and measurements.

From a system of systems point of view, an end-user request may result in access to one or more services 1-8 in the federated eco-system. Responding service executions can exhibit various temporal relationships such as sequential, parallel or alternatives. Collectively the QoS characteristics of individual systems provide derived QoS characteristics at the end-user level. The derivation is complicated by sometimes nondeterministic temporal relationships of the individual network path, service, and host participating in fulfilling the end-user's needs.

Therefore, understanding the QoS characteristics of each network path, service, and host of the utilized services in a cloud computing environment requires decomposition of end-user workloads on elements of the federated eco-system and derivation of the QoS measurements of these elements back to the system of systems level. Decomposition and derivation techniques for analysis in the federated eco-system have become critical in managing service delivery with optimal resources and minimal cost.

Embodiments of the disclosure provide a system and methods for decomposition and derivation, where the complete service usage, connection, and hosting relationships in a federated eco-system are modeled. However, the embodiments can also be extended to situations where there are concurrent service usages from other service systems. Simulation approaches as explained in more detail below can be especially useful in this case when a workload of each supporting service node does not only depend on a targeted root service within the network clouds 104 (e.g., Service 1 node in Figure 1) but also other services across the network clouds 104 (e.g., Service 4 and Service 6 nodes in Figure 1) that share some common supporting services (e.g., Service 7 node in Figure 1).

A practice of applying operations research to model and understand complex business relationships is a basis for the establishment of this QoS modeling capability. The use of the Internet and associated technologies has enabled business to establish dynamic and complex business relationships with multiple service providers and partners. An understanding of and the ability to evaluate and determine a method of observing, monitoring and analyzing the composition of the internet or cloud services (e.g., services 1-8) is an emergent and substantial requirement from the business.

In some embodiments, a method is provided for evaluating, modeling and anticipating a performance of an open eco-system to the end-users as a composition of services provided by service partners. Services provided by an open eco-system service partner may be optimized based on anticipated integrations in the open eco-system. Similar performance, reliability, availability, and scalability can be similarly modeled and evaluated. A process and a set of techniques can model complex cloud computing services of a federated eco-system as a composition of primitive models. The primitive models are based on three basic entities: Service, Host, and Network Segment. Patterns of structures and relationships of the three entities are a small number of primitive models that, when used recursively, are sufficient to represent the complex cloud computing model for a federated eco-system. Properties of the primitive models (e.g., QoS characteristics such as cost, and the like) are mathematically represented and analyzed.

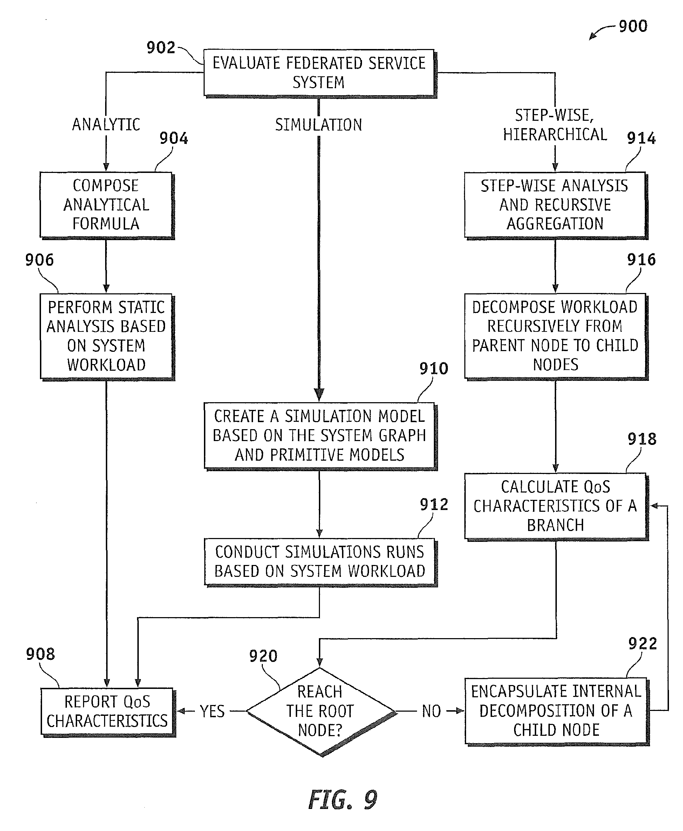

Embodiments of the disclosure also provide a system and methods for representing a complex federated eco-system using well-understood primitive models, which allows analyzing properties of the federated eco-system by recursively analyzing primitive models as basic building blocks. Analysis is provided where QoS analytical models exist for a composite system of services (e.g., services 1-8), and where such models are hard to derive, QoS simulation models would be needed as explained in more detail in the context of discussion of Figure 9.

Primitive Models

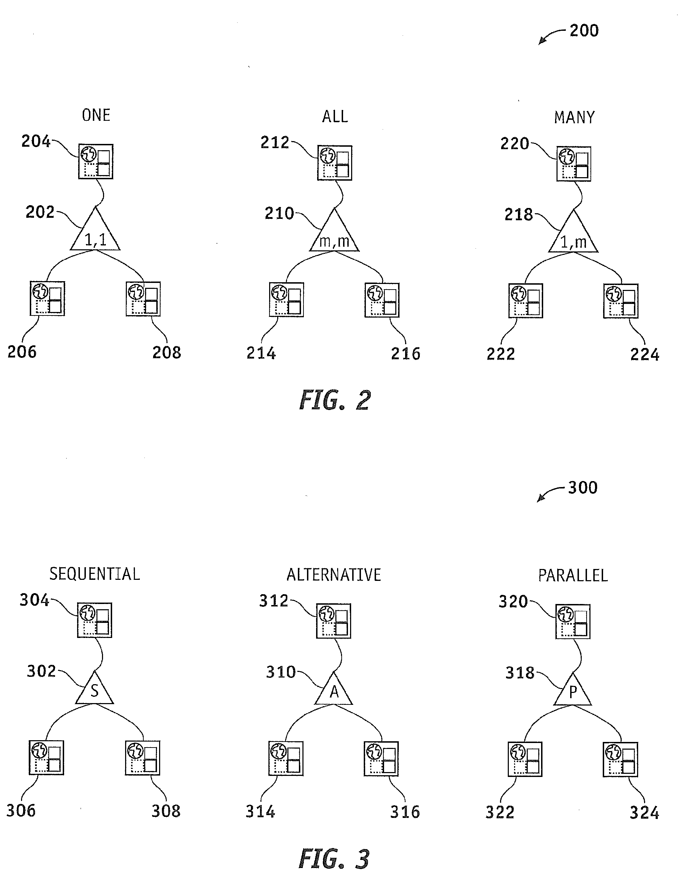

Nodes are used to represent entities and relations, and links are used between nodes to represent associations of those entities and relations. For example, if Service 1 node uses either Service 2 node or Service 3 node, it will have three service nodes, and an additional relation node which comprises one incoming link from the Service 1 node and two outgoing links to Service 2 and Service 3 nodes. Each relation node comprises a tag describing a type of the relation and is depicted as a triangular node (Figure 2).

A set of the primitive models (Figures 2-5) are identified as basic building blocks for composite services. To distinguish primitive elements (e.g., the primitive models) visually for modeling, three types of nodes are depicted as different graphical icons to indicate their types: a host such as a server 506, a service such as a service 204, and a network segment such as a network segment c1 422, and c2 424. In addition, inter-entity relationships such as a functional relationship 202 are also depicted graphically in Figure 2. For relationships and network segments, additional markups in the graphical icons show patterns of the relationships (e.g., [1, 1]).

Primitive Models And Decomposition Approach

Embodiments of the disclosure provide a decomposition approach, where a set of primitive models are identified to represent basic structures and relationships between services 1-8, inter-cloud network segments 106 (Figure 1) and cloud hosts 102. These primitive models can be composed and derived to represent complex service/host/network relationships in real domain applications. The QoS measurements for composite services built upon the basic primitive blocks are derived by studying the QoS characteristics of the primitive models and their derived behavior.

In this manner, a decomposition approach is provided based upon the identified primitive models for derived complex services, followed by analysis of the QoS for the federated eco-systems.

Three types of entities for modeling the network clouds 104 services are identified. One type of entity is the services 1-8 that provide information to customers comprising the end-users. Another type of entity comprises the hosts 102 that enable services in the network clouds 104 and provides computation and storage resources for running the services 1-8 comprising, for example but without limitation, web applications, databases, other supporting software applications, and the like. Intra-cloud network segments 110 within the network clouds 104 provide network communication (e.g., service flows 108) between the services 1-8 and the hosts 102 within the network clouds 104. Another type of entity is the inter-cloud network segments 106 across the network clouds 104 (i.e., network connection) that provides network communication between the services 1-8 and the hosts 102 across the network clouds 104. In the federated eco-system, the services 1-8 can use other services to provide certain information to meet end users' needs. The services 1-8 are composed in the network clouds 104 or across the network clouds 104 through network connections provided by network infrastructures. Each of the services 1-8 is hosted on one or more servers such as the hosts 102. One host 102 server can run multiple concurrent services.

The quality of a service is affected by various factors of all the three entities. For example, the response time of a service such as each of the services 1-8 depends on its hosting server's computation power, the service application's processing efficiency, the concurrent applications running on the host 102 server competing for scarce resources, network bandwidth and contention status, and the number of service requests. Besides, each of the services 1-8 has economic cost that can be measured by monetary value. A service can also be associated with some risks as a result of security breach or other kinds of non-optimal performances.

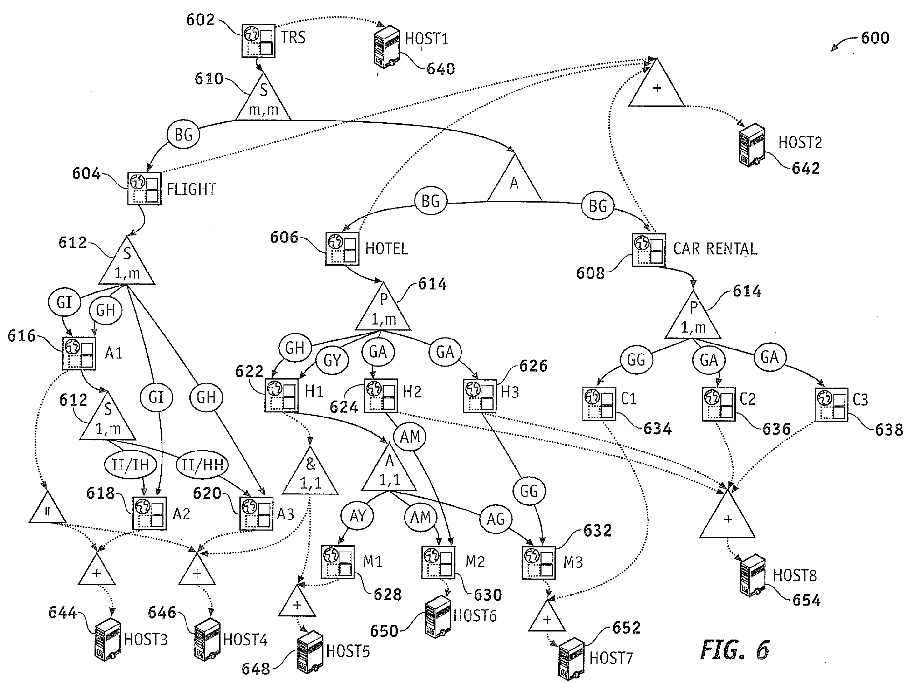

The services 1-8 can utilize other existing services to provide data to meet their service needs. As the services 1-8 compositions grow more and more complex, services involved may reside in different computing clouds such as the network clouds 104 forming a federated eco-system. For example, a Travel Reservation Service (TRS) 602 (Figure 6) system needs flight information from airlines, room and amenity information from hotels, and rental car price and availability information from car rental companies. In this case, a Flight Reservation Services (FRS) 604, a Hotel Reservation Service (HRS) 606, and a Car Rental Reservation Service (CRS) 608 provide supporting information services to the TRS service (Figure 6). The TRS 602 is thus a federated eco-system with airline, hotel, and car rental reservations in potentially different computing clouds such as the network clouds 104 connected by the inter-cloud network segments 106. Thus the structures and relationships of the services 1-8, the host 102, and the inter-cloud network segments 106 concepts can be substantially complex in a federated eco-system. Fortunately, according to embodiments of the disclosure, these structures and relationships can be synthesized into a small number of primitive models such that a complex open eco-system is a recursive composition of the primitive models.

Figure 2 is an illustration of exemplary service usage functional relationship primitive models 200 (primitive model 200) according to an embodiment of the disclosure. A service usage relationship is modeled to understand a derived service behavior. Three kinds of functional relationships for service usage are identified, in this manner, the service usage functional relationship primitive models 200 are classified into three categories: One, All, Many.

A "One" functional relationship 202 comprises a first service 204 using one and only one of a plurality of sub-level supporting services such as a second service 206 and a third service 208. The "One" functional relationship 202 comprises a one-to-one [1, 1] relationship.

An "All" functional relationship 210 comprises a first service 212 using all of a plurality of sub-level supporting services such as a second service 214 and a third service 216 to meet its service need. The "All" functional relationship 210 comprises an all-to-all [m, m] relationship.

A "Many" functional relationship 218 comprises a first service 220 using some but not necessarily all of a plurality of sub-level supporting services such as a second service 222 and a third service 224 to meet its service need. The "Many" functional relationship 218 comprises a one-to-many [1, m] relationship.

Figure 3 is an illustration of exemplary service usage temporal relationship primitive models 300 (primitive models 300) according to an embodiment of the disclosure. A temporal relationship of service usage influences a timing of service requests flowing down to the sub-level supporting services. The primitive models 300 may be classified into three categories: Sequential, Alternative, and Parallel.

A sequential temporal relationship (S) 302 comprises a first service 304 using a plurality of sub-level supporting services such as a second service 306 and a third service 308 in sequential order, i.e., one after another. Furthermore, the sequential order is used for each usage of the sequential temporal relationship 302.

An alternative temporal relationship (A) 310 comprises a first service 312 using a plurality of sub-level supporting services such as a second service 314 and a third service 316 in a non-persistent sequential order. In the alternative temporal relationship 310, a service can use the sub-level supporting services in sequence, but an order of using the sub-level supporting services does not matter. For example but without limitation, a subservice used first at one time can be used second at another time.

A parallel temporal relationship (P) 318 comprises a first service 320 using a plurality of sub-level supporting services such as a second service 322 and a third service 324 concurrently, i.e., using all sub-level supporting services simultaneously.

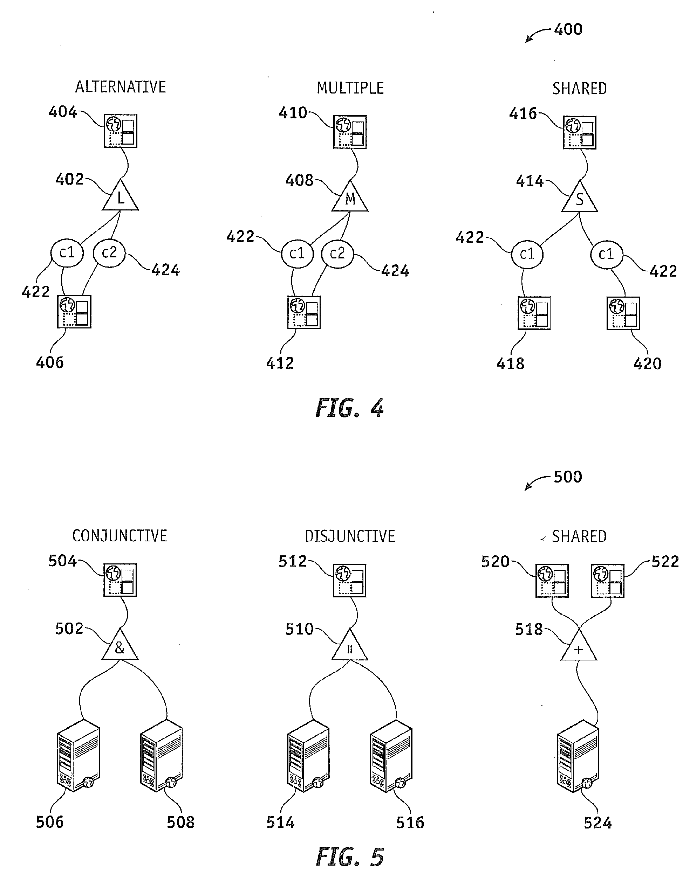

Figure 4 is an illustration of exemplary service connection relationship primitive models 400 (primitive models 400) according to an embodiment of the disclosure. The inter-cloud network segments 106 that connect services 1-8 between network clouds 104 (Figure 1) also affect a derived quality of services 1-8. Three kinds of service connection relationships are identified in the primitive models 400, in this manner, the primitive models 400 are classified into three categories: Alternative, Multiple, and Shared.

An alternative connection relationship (L) 402 comprises a first service 404 coupled by a plurality of network segments c1 422, and c2 424 to a second service 406, among which, one of the network segments c1 422, and c2 424 is used.

A multiple connection relationship (M) 408 comprises a first service 410 coupled by a plurality of network segments c1 422, and c2 424 to a second service 412, and a two way of communication between the first service 410 and the second service 412 are different. For example but without limitation, a download bandwidth c1 422 may be greater than an upload bandwidth c2 424, which are differentiated as multiple connections of the network segments c1 422, and c2 424 to the second service 406.

A shared connection relationship (S) 414 comprises at least one first service 416 coupled by a shared network segment c1 422 to a plurality of services such as a second service 418 and a third service 420. In the network segment c1 422 of the shared connection relationship 414, a pair of services may compete for bandwidth usage during communication with another pair of services 1-8.

Figure 5 is an illustration of exemplary service hosting relationship primitive models 500 according to an embodiment of the disclosure. The service hosting relationship primitive models 500 (primitive models 500) are classified into three categories: Conjunctive, Disjunctive, and Shared. A conjunctive hosting relationship (&) 502 comprises a service 504 hosted on multiple servers such as a first server 506 and a second server 508. A disjunctive hosting relationship (II) 510 comprises a service 512 that may be hosted on one of multiple servers such as a first server 514 or a second server 516. A shared hosting relationship (+) 518 comprises multiple services such as a first server 520 and a second server 522 that are co-hosted on a common server 524.

Figure 6 is an illustration of an exemplary federated service system 600 showing composite model graph comprising a service decomposition of the federated service system 600 using the primitive models 200-500 according to an embodiment of the disclosure.

Using the primitive models 200-500 above, an eco-system service can be decomposed into its supporting services 1-8 (Figure 1) hosted by Host1 640 to Host8 654 respectively. To illustrate the decomposition process, a generic Travel Reservation Service (TRS) system is used as an example. A TRS web portal provides a universal entry point for travel reservation service. It uses flight services provided by various airlines, hotel services provided by different hotel companies, and car rental services provided by a number of car rental companies. A TRS service response time experienced by the users are determined by all these supporting services.

A TRS service 602 can be decomposed into the supporting Flight Reservation Service (FRS) 604, the Hotel Reservation Service (HRS) 606, and the Car Rental Reservation Service (CRS) 608. These three services are all necessary supporting services for the TRS service 602. Therefore, the service usage functional relationship is "ALL" type (Figure 2) and the relation node is marked by S[m,m] 610. Figure 6 shows a simplified TRS model as an example, in which there are a few airline, hotel and car rental reservation services used by the TRS service 602. The relationship nodes also combine tags for functional relationship with temporal relationships of service usages for efficient visual display.

The TRS service 602 may use both the HRS 606 and the CRS 608. In a sequential temporal relationship (Figure 3), the overall response time for the TRS service 602 will need to add both a response time of the HRS 606 and a response time of the CRS 608. But, in a parallel temporal relationship, it only needs to add one response time, either the HRS 606 or the CRS 608, whichever is the greater. In Figure 6, the TRS service 602 uses the three supporting services sequentially, marked by relationship node S[m,m] 610, but the order of using the HRS 606 and the CRS 608 does not matter (i.e., Alternative temporal relationships in Figure 3).

The FRS 604 uses some of the airline flight reservation services to collect relevant information, but not mandatorily all of them. So the FRS 604 is further decomposed into individual airline reservation services by the "Many" functional relationship (Figure 2), marked by [1,m]. Same compositional relation exists in the HRS 606 and the CRS 608.

The service usage functional relationship is also combined with the temporal relationship of the service usage respectively. For example, Sequential temporal relationship (S) is used with [1,m] (e.g., S[1,m] 612) functional relationship of service usage of AI 616, A2 618, and A3 620 airline reservation services by the FRS 604 node. Parallel temporal relationship (P) is used with [1,m] (e.g., P(1,m) 614) functional relationship of H1 622, H2 624, and H3 626 hotel reservation service by the HRS 606. Also the parallel temporal relationship (P) is used with [1,m] (e.g., P(1,m) 614) functional relationship of C1 634, C2 636, and C3 638 car reservation services by the CRS 608. Here, different combinations of temporal relationships and functional relationships are used to show flexibility of composing and representing a system with primitive models such as the primitive models 200-500. These combinations are exemplary only showing a composite model of the services 1-8 as a recursive composition of the primitive models 200-500.

For example, the H1 622 hotel reservation service is decomposed to use one of the map services provided by M1 628, M2 630, and M3 632, for the cases that one and only one supporting service is sufficient for composite service need. When service hosting relationships and connection relationships are added in, the graph in Figure 6 is denser with additional dimensions of relationships and entities and looks more complicated. Arcs of different shading are used to distinguish the service usage relationships and service hosting relationships, which shows a decomposition model for TRS example with some service hosting and networking relationship (e.g., AG, AM, AY, BG, G1, GA, GG, GY, GH, IH/HH, II/IH).

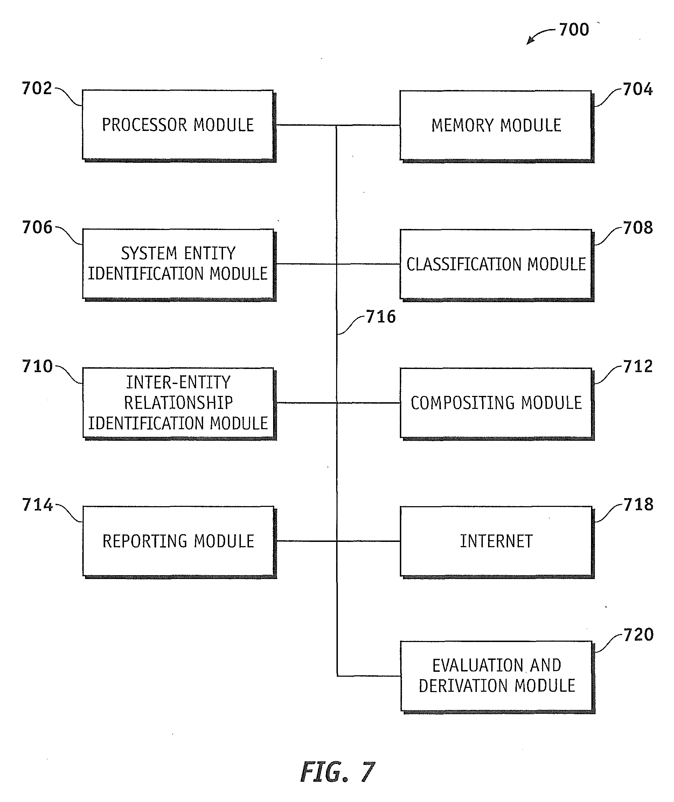

Figure 7 is an illustration of an exemplary functional block diagram of a federated cloud services Quality of Service (QoS) characteristics modeling system (system 700) according to an embodiment of the disclosure. The system 700 generally comprises a processor module 702, a memory module 704, a system entity identification module 706, a classification module 708, an inter-entity relationship identification module 710, a compositing module 712, an evaluation and derivation module 720, a reporting module 714, and a network 716. The processor module 702, the memory module 704, the system entity identification module 706, the classification module 708, the inter-entity relationship identification module 710, the compositing module 712, the evaluation and derivation module 720, and the reporting module 714 may be coupled to and communicate with each other via the network 716.

The processor module 702 comprises processing logic that is configured to carry out the functions, techniques, and processing tasks associated with the operation of the system 700. In particular, the processing logic is configured to support the system 700 described herein. For example but without limitation, the processor module 702 may direct; the system entity identification module 706 to identify the system entities of the federated service system 600, the inter-entity relationship identification module 710 to identify the inter-entity relationships of the system entities, the classification module 708 to classify each of the system entities to provide entity classifications, and to classify each of the inter-entity relationships as the primitive model 200-500 to provide inter-entity relationship classifications, and the like.

Further, the processor module 702 may direct the compositing module 712 to generate a composite model of the federated service system 600 comprising the system entities, the entity classifications, the inter-entity relationships, and the inter-entity relationship classifications. The processor module may also direct the evaluation and derivation module 720 to evaluate and derive the QoS characteristics of the composite model. These and other functions of the processor module 702 are explained in more detail below.

The processor module 702 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

The memory module 704 may comprise a data storage area with memory formatted to support the operation of the system 700. The memory module 704 is configured to store, maintain, and provide data as needed to support the functionality of the system 700 in the manner described below. For example but without limitation, the memory module 704 may store, the system entities, the entity classifications, parameters for developing an analytical model of the primitive model 200-500, and the like. The parameters may comprise, for example but without limitation, an arrival rate parameter $\lambda$, service time parameter $\mu_i$ for the $i^{th}$ host 102, utilization ($\lambda/\mu_i$) of each $i^{th}$ host 102, number (m) of hosts 102, and the like, as explained in more detail in the context of discussion of Figure 9 below.

In practical embodiments, the memory module 704 may comprise, for example but without limitation, a non-volatile storage device (non-volatile semiconductor memory, hard disk device, optical disk device, and the like), a random access storage device (for example, SRAM, DRAM), or any other form of storage medium known in the art.

The memory module 704 may be coupled to the processor module 702 and configured to store, for example but without limitation, a database, and the like. Additionally, the memory module 704 may represent a dynamically updating database containing a table for updating the database, and the like. The memory module 704 may also store, a computer program that is executed by the processor module 702, an operating system, an application program, tentative data used in executing a program, and the like.

The memory module 704 may be coupled to the processor module 702 such that the processor module 702 can read information from and write information to the memory module 704. For example, the processor module 702 may access the memory module 704 to access the parameters of the primitive models 200-500, system entities, entity classifications, and the like.

As an example, the processor module 702 and memory module 704 may reside in respective application specific integrated circuits (ASICs). The memory module 704 may also be integrated into the processor module 702. In an embodiment, the memory module 704 may comprise a cache memory for storing temporary variables or other intermediate information during execution of instructions to be executed by the processor module 702.

The system entity identification module 706 is operable to identify a plurality of system entities of the federated service system 600.

The classification module 708 is operable to classify each of the system entities as one of: a service, a host and a network segment to provide a plurality of entity classifications.

The inter-entity relationship identification module 710 is operable to identify inter-entity relationships of the system entities. The inter-entity relationships may comprise, for example but without limitation, a service usage relationship, a service usage functional relationship, a service usage temporal relationship, a hosting relationship, a connection relationship, and the like. These relationships are shown in Figures 2-5 in the primitive models 200-500.

The compositing module 712 is operable to create a composite model of the federated service system 600 comprising the system entities, the inter-entity relationships, and the entity classifications. The compositing module 712 may recursively apply the primitive models 200-500 to provide the composite model. The compositing module 712 may represent the composite model in Extensible Markup Language (XML) based on a primitive model XML schema specification to provide an XML-based representation of the composite model. The composite model may represent a federated service system. The compositing module 712 may recursively decompose the composite model into a graph (recursively decomposed primitive model graph) of a plurality of the primitive models 200-500.

The compositing module 712 may define a workload model for the federated service system 600 (Figure 6), wherein a root (e.g., TRS 602 in Figure 6) of the recursively decomposed graph (primitive model graph, Figure 6) represents a starting point of a workload imposed on the federated service system 600 by at least one end-user, and decompose the workload recursively from a parent node such as the TRS 602 to a child node such as the FRS 604 by following one of the primitive models that the parent-child nodes (e.g., TRS 602-FRS 604) form.

The evaluation and derivation module 720 applies an evaluation and derivation method to calculate QoS characteristics of the composite model of the federated services 1-8. This module uses the model generated by the composting module 712, which is a combination of appropriate primitive models 200-500 according to domain-specific service usage relationships. The derived behavior of the federated service system 600 is then evaluated based on an atomic behavior of primitive models 200-500 and a way they federate the federated service system 600.

The reporting module 714 is operable to report the QoS characteristics of the federated service system 600 on a display, a printer, a database, and the like. The network 716 may comprise any network technology suitable for use by the system 700. The network 716 may comprise, for example but without limitation, an Ethernet, a WI-FI system, a cellular communication system, an optical fiber system, combinations thereof, and the like. The network 716 may couple the system 700 to, for example but without limitation, the internet 718, an open eco-system, and the like.

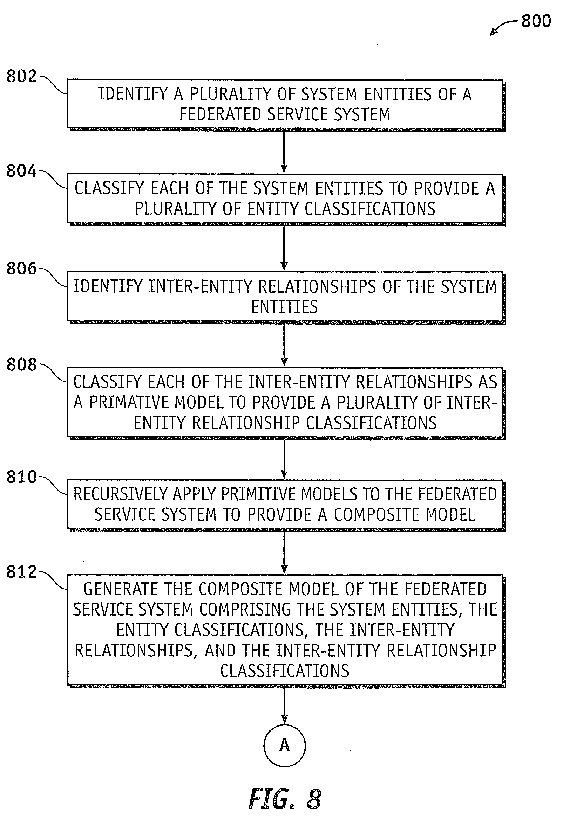

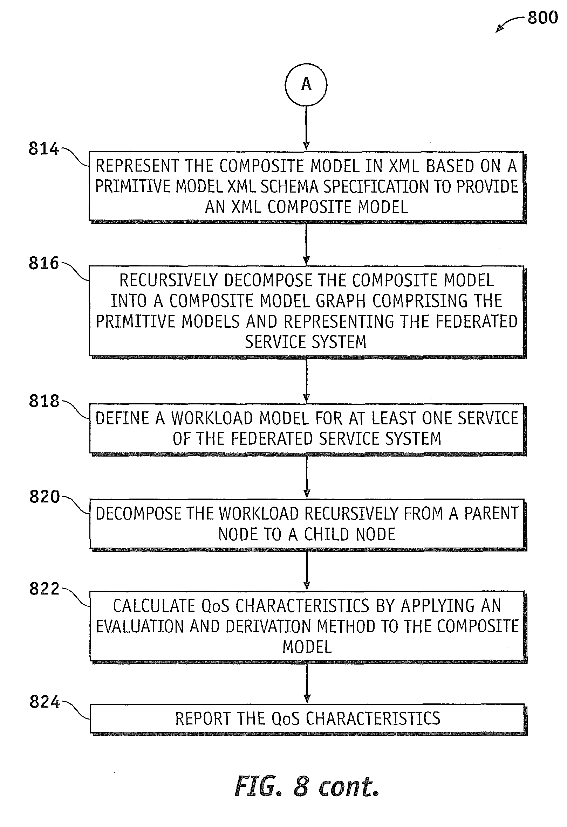

Figure 8 is an illustration of an exemplary flowchart showing a federated cloud services Quality of Service (QoS) characteristics modeling and analyzing process 800 according to an embodiment of the disclosure. The various tasks performed in connection with process 800 may be performed mechanically, by software, hardware, firmware, or any combination thereof. The process 800 may be recorded in a computer-readable storage medium such as a semiconductor memory, a magnetic disk, an optical disk, and the like, and can be accessed and executed, for example, by a computer CPU such as the processor module 702 (Figure 7) in which the computer-readable storage medium is stored.

It should be appreciated that process 800 may include any number of additional or alternative tasks, the tasks shown in Figure 8 need not be performed in the illustrated order, and the process 800 may be incorporated into a more comprehensive procedure or process having additional functionality not described in detail herein.

For illustrative purposes, the following description of process 800 may refer to elements mentioned above in connection with Figure 1-7. In practical embodiments, portions of the process 800 may be performed by different elements of the system 700 such as: the processor module 702, the memory module 704, the system entity identification module 706, the classification module 708, the inter-entity relationship identification module 710, the compositing module 712, the reporting module 714, the Internet 718, the evaluation and derivation module 720, the network 716, etc. The process 800 may have functions, material, and structures that are similar to the embodiments shown in Figure 7. Therefore common features, functions, and elements may not be redundantly described here.

Process 800 may begin by the entity identification module 706 identifying a plurality of system entities of the federated service system 600 (task 802).

Process 800 may continue by the classification module 708 classifying each of the system entities to provide a plurality of entity classifications (task 804). The entity classifications may comprise, for example but without limitation, one of: a service, a host and a network segment.

Process 800 may continue by the inter-entity relationship identification module 710 identifying a plurality of inter-entity relationships of the system entities (task 806).

Process 800 may continue by the classification module 708 classifying each of the inter-entity relationships as a primitive model such as the primitive model 200-500 to provide a plurality of inter-entity relationship classifications (task 808). The inter-entity relationships may comprise, for example but without limitation, a service usage functional relationship, a service usage temporal relationship, a hosting relationship, a connection relationship, and the like.

Process 800 may continue by the compositing module 712 recursively applying one or more primitive models such as the primitive models 200-500 to the federated service system 600 to provide a composite model (task 810).

Process 800 may continue by the compositing module 712 generating the composite model of the federated service system 600 comprising the system entities, the entity classifications, the inter-entity relationships, and the inter-entity relationship classifications (task 812). The composite model may be a combination of appropriate primitive models 200-500 according to domain-specific service usage relationships. A derived behavior of the federated eco-system may then be evaluated based on an atomic behavior of the primitive models 200-500 and a manner in which the primitive models 200-500 federate the federated eco-system 600.

The services 1-8 can be represented in the XML language to describe the service entities, service usage relationships and other relationships between the services 1-8, the hosts 102, and the network clouds 104. The XML schema defines constraints on a structure and content of an XML document so that the structure and content are both specific and comprehensive to be used for describing composite service models. An XML description of a service model can be parsed by computational algorithms for evaluating service performance and other QoS characteristics.

Process 800 may continue by the compositing module 712 representing the composite model in XML based on a primitive model XML schema specification to provide an XML composite model (task 814). For automated modeling and analysis, an XML schema as a machine understandable language may be created to represent a cloud computing model for the federated eco-system.

Process 800 may then continue by the compositing module 712 recursively decomposing the composite model (or the XML composite model) into a composite model graph (Figure 6) comprising the primitive models 200-500 and representing the federated service system 600 (task 816).

Process 800 may continue by defining a workload model for at least one federated service such as at least one of the services 1-8 of the federated service system 600 (task 818). A root (e.g., TRS 602) of the composite model graph represents a starting point of a workload imposed on the federated service system 600 by at least one end-user as explained above.

Process 800 may continue by the compositing module 712 decomposing the workload recursively from a parent node (e.g., TRS 602) to at least one child node (e.g., FRS 604) (task 820). Decomposing the workload recursively from the parent node to the least one children node may follow properties of a specific primitive model of the primitive models 200-500 that parent-child node combinations may form.

Process 800 may continue by the evaluation and derivation module 720 calculating QoS characteristics by applying an evaluation and derivation method to the composite model (task 822). The evaluation and derivation module 720 applies an evaluation and derivation method to calculate the QoS characteristics based on the primitive models 200-500).

Process 800 may continue by the reporting module 714 reporting the QoS characteristics of the federated system (task 824). Methods for evaluation and derivation of the QoS characteristics of the federated service system 600 can be analytic, simulation, or stepwise hierarchical as explained in the context of Figure 9.

Figure 9 is an illustration of an exemplary flowchart showing an evaluation and derivation process 900 for calculating QoS characteristics of federated services such as the services 1-8 in an open eco-system according to an embodiment of the disclosure. The various tasks performed in connection with process 900 may be performed mechanically, by software, hardware, firmware, or any combination thereof. The process 900 may be recorded in a computer-readable storage medium such as a semiconductor memory, a magnetic disk, an optical disk, and the like, and can be accessed and executed, for example, by a computer CPU such as the processor module 702 (Figure 7) in which the computer-readable storage medium is stored. It should be appreciated that process 900 may include any number of additional or alternative tasks, the tasks shown in Figure 9 need not be performed in the illustrated order, and the process 900 may be incorporated into a more comprehensive procedure or process having additional functionality not described in detail herein.

For illustrative purposes, the following description of process 900 may refer to elements mentioned above in connection with Figure 1-7. In practical embodiments, portions of the process 900 may be performed by different elements of the system 700 such as: the processor module 702, the memory module 704, the system entity identification module 706, the classification module 708, the inter-entity relationship identification module 710, the compositing module 712, the reporting module 714, the network 716, the internet 718, the evaluation and derivation module 720, etc. The process 900 may have functions, material, and structures that are similar to the embodiments shown in Figure 7. Therefore common features, functions, and elements may not be redundantly described here.

Process 900 may begin by the evaluation and derivation module 720 selecting an evaluation and derivation method such as an analytical, a simulation, or a step-wise hierarchical method for a federated service system such as the system 600 (task 902).

If the analytical method is selected, process 900 continues by composing analytical formulas (task 904), performing static analysis based on the system work load (task 906), and reporting QoS characteristics of the federated service system 600 (task 908). The analytical evaluation is practically useful in a case where the whole system's 600 QoS characteristics can be statically composed as a super analytical formula. In this case, the whole system's 600 QoS characteristics at the root level can be analyzed and derived in one step. In some cases, a super analytical formula for the system 600 can be constructed from the primitive models 200-500. In such cases, results may be analyzed and derived from the super analytical formula. Below are two examples of analytic models that can be used for the primitive models such as the primitive models 200-500, based on the following assumptions:

1. Service request rates to the primitive models 200-500 follow a Poisson arrival process, with arrival rate parameter $\lambda$.

2. Service times at hosts are exponentially distributed, with service time parameter $\mu_i$ for the $i^{th}$ host, and the service approach at each host is assumed to be First Come First Serve (FCFS).

3. Service times for different hosts are independently distributed.

4. A utilization $(\lambda/\mu_i)$ of each $i^{th}$ host is less than one so that each service is a stable system when considering the overall service rate to the primitive models.

Example 1, All m hosts to be completed sequentially <Ts, [m,m]>

Given the assumptions listed above, this primitive model is an example of a (simplified) Jackson network because a request completing service at a host will move to the next host in order or out of the system with probability 1. Using the theory of Jackson networks,

The arrival rate at each host is equal to $\lambda$.

The expected delay at the $i^{th}$ host is equal to:

$$T_i = \frac{1}{\mu_i - \lambda},$$

The expected end-to-end system delay is equal to:

$$T = \frac{1}{m * \lambda} \sum_{i=1}^{m} \frac{\lambda_i}{\mu_i - \lambda_i},$$

and

All hosts can be considered as M/M/1 queues so that the expected end-to-end system delay has a hypo-exponential distribution (or a generalized Erlang distribution). A cumulative distribution function $F_1(y)$ for $Y$ is based on the following relationship:

$$F_1(y) = P(Y \leq y) = 1 - \alpha e^{y\Theta} 1,$$

where, 1 is a vector of size m of all 1s, $\alpha = e_1$, or the vector of size m with all 0s except a 1 in the first position, $e^{y\Theta}$ is the matrix exponential of $y\Theta$, or

$$e^{y\Theta} = \sum_{j=0}^{\infty} \frac{1}{j!} (y\Theta)^j,$$

where j is an integer, and

$$\Theta \equiv \begin{bmatrix} -\lambda_1 & \lambda_1 & 0 & \ldots\ldots\ldots 0 \\ 0 & -\lambda_2 & \lambda_2 & 0 & \ldots\ldots 0 \\ . & & & \\ . & & & \\ 0 & \ldots\ldots\ldots & -\lambda_{m-1} & \lambda_{m-1} \\ 0 & \ldots\ldots\ldots\ldots & -\lambda_m \end{bmatrix}.$$

For example, [100 * $F_1(T)$]% of the time, the service time will be less than or equal to T.

Example 2, All m hosts to be completed in parallel <Tp, [m,m]>

In this case, it is assumed that all tasks can enter the queue to be serviced by each host independently of the services at the other hosts. A cumulative distribution function $F_2(y)$ is for a maximum of exponential service rates for a given arrival rate based on the following relationship:

$$F_2(y) \equiv P(Y \leq y) = 1 - \prod_{i=1,m} e^{(\mu_i - \lambda)x}.$$

As in example 1 [100*$F_2(T)$]% of the time, a service time will be less than or equal to T.

In practice, for example, a network service provider can choose a host 102 server which can operate at smaller service time when providing a given service among the services 1-8 to the users of the federated cloud service 100 in the open eco-system utilized in a system such as the system 600. Smaller service time can translate to more users on a given network for a given resource.

If the simulation method is selected, the process 900 may continue by creating a simulation model based on system graphs and the primitive modules 200-500 (task 910), conduct simulation runs based on the system workload (task 912), and lead to the task 908. A simulation model is created for the system 600 based on the primitive models 200-500 and their compositions in the system 600. In a simulation-based analysis, the system's 600 QoS characteristics at the root level can be analyzed and derived by simulation runs and the workloads of the children nodes are the byproduct of the simulation runs.

This simulation model is particularly useful when the whole system's 600 QoS characteristics cannot be statically composed as the super analytical formula explained above. Thus, a scenario in which the simulation may be selected is that the system 600 represent a combination of primitives and composition for which equations may not be easily derived.

If step-wise hierarchical method is selected, process 900 may continue by step-wise analysis and recursive aggression (task 914), decompose the workload recursively from the parent node to the child nodes (task 916), and calculate QoS characteristics of a branch (task 918). If the calculation in the task 918 reaches the root node (YES branch of inquiry task 920), then process 900 leads to the task 908, otherwise (NO branch of inquiry task 920), the process 900 encapsulates internal decomposition of the child node (task 922), and returns back to the task 918. A step-wise analysis and recursive aggregation is performed, starting from the lowest level of the primitive models, using either analytic or simulation approaches to calculate its QoS characteristics based on the primitive models 200-500. This step is performed recursively until the root level system QoS characteristics are derived (in this case, the workloads of each primitive models should be derived first). The step-wise hierarchical evaluation is particularly useful when the QoS characteristics of one or more branches of the system 600 are required and composed as reusable components with one or more of the primitive models 200-500. In one embodiment, the step-wise hierarchical method is not mutually exclusive with analytical and simulation methods. For example, analytical and simulation methods may be used in certain steps of the step-wise hierarchical method as needed.

In this way, embodiments of the disclosure provide a system and method for modeling and analyzing Quality of Service (QoS) characteristics of a federated service system in an open eco-system. The federated service system is reduced into primitives or atomic concepts and elements for mathematically modeling and analysis. QoS models of basic elements are identified and composed to derive system of system QoS characteristics. QoS characteristics of the federated service system for the end-users given a workload model are modeled for prediction. Furthermore, the modeling and analysis can be used for planning and runtime allocation of resources with required system of systems QoS characteristics and minimal cost. In this manner, a network service provider can choose a host server, which can operate with smaller service time when providing a given service to the end-users of the federated service in the open eco-system. Smaller service time can translate to optimized utilization of a given network such as more end-users on a given network for a given resource. Thereby, revenue for the network service providers can be increased while providing an excellent end-user experience.

In this document, the terms "computer program product", "computer-readable medium", "computer readable storage medium", and the like may be used generally to refer to media such as, for example, memory, storage devices, or storage unit. These and other forms of computer-readable media may be involved in storing one or more instructions for use by the processor module 702 to cause the processor module 702 to perform specified operations. Such instructions, generally referred to as "computer program code" or "program code" (which may be grouped in the form of computer programs or other groupings), when executed, enable power utilization scheduling methods of the system 700.

The above description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although Figures 1-7 depict example arrangements of elements, additional intervening elements, devices, features, or components may be present in an embodiment of the disclosure.

Terms and phrases used in this document, and variations thereof, unless otherwise expressly stated, should be construed as open ended as opposed to limiting. As examples of the foregoing: the term "including" should be read as mean "including, without limitation" or the like; the term "example" is used to provide exemplary instances of the item in discussion, not an exhaustive or limiting list thereof; and adjectives such as "conventional," "traditional," "normal," "standard," "known" and terms of similar meaning should not be construed as limiting the item described to a given time period or to an item available as of a given time, but instead should be read to encompass conventional, traditional, normal, or standard technologies that may be available or known now or at any time in the future.

Likewise, a group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should also be read as "and/or" unless expressly stated otherwise. Furthermore, although items, elements or components of the disclosure may be described or claimed in the singular, the plural is contemplated to be within the scope thereof unless limitation to the singular is explicitly stated. The presence of broadening words and phrases such as "one or more," "at least," "but not limited to" or other like phrases in some instances shall not be read to mean that the narrower case is intended or required in instances where such broadening phrases may be absent.

**Claims**

1. A method for modeling and analyzing Quality of Service (QoS) characteristics of federated cloud services in an open eco-system, the method comprising:

   identifying a plurality of system entities of a federated service system;
   classifying each of the system entities to provide a plurality of entity classifications;
   identifying a plurality of inter-entity relationships of the system entities;
   classifying each of the inter-entity relationships as a primitive model to provide a plurality of inter-entity relationship classifications; and
   generating a composite model of the federated service system comprising the system entities, the entity classifications, the inter-entity relationships, and the inter-entity relationship classifications.

2. The method according to claim 1, wherein the entity classifications comprise one of: a service, a host and a network segment.

3. The method according to claim 1, wherein the inter-entity relationship classifications comprise at least one member selected from the group consisting of: a service usage functional relationship, a service usage temporal relationship, a hosting relationship, and a connection relationship.

4. The method according to claim 1, further comprising recursively applying one or more primitive models to the federated service system to provide the composite model.

5. The method according to claim 4, further comprising recursively decomposing the composite model into a composite model graph comprising the one or more primitive models and representing the federated service system.

6. The method according to claim 5, further comprising:

   defining a workload model for at least one federated service of the federated service system, wherein a root of the composite model graph represents a starting point of a workload imposed on the at least one federated service by at least one end user; and
   decomposing the workload recursively from a parent node to at least one child node.

7. The method according to claim 1, further comprising calculating QoS characteristics by applying an evaluation and derivation method to the composite model.

8. The method according to claim 7, further comprising reporting the QoS characteristics of the composite model.

9. The method according to claim 1, further comprising representing the composite model in XML based on a primitive model XML schema specification to provide an XML composite model.

10. A Quality of Service (QoS) characteristics modeling and analysis system for federated cloud services, the system comprising:

    a system entity identification module operable to identify a plurality of system entities of a federated service system;
    an inter-entity relationship identification module operable to identify a plurality of inter-entity relationships of the system entities;
    a classification module operable to:

       classify each of the system entities to provide a plurality of entity classifications; and
       classify each of the inter-entity relationships as a primitive model to provide a plurality of inter-entity relationship classifications; and

    a compositing module operable to generate a composite model of the federated service system comprising the system entities, the entity classifications, the inter-entity relationships, and the inter-entity relationship classifications.

11. The system according to claim 10, wherein the entity classifications comprise one of: a service, a host and a network segment.

12. The system according to claim 10, wherein the inter-entity relationships comprise at least one member selected from the group consisting of: a service usage functional relationship, a service usage temporal relationship, a hosting relationship, and a connection relationship.

13. The system according to claim 10, further comprising an evaluation and derivation module operable to evaluate and derive QoS characteristics of the composite model.

14. The system according to claim 10, wherein the compositing module is further operable to represent the composite model in XML based on a primitive model XML schema specification to provide an XML composite model.

15. The system according to claim 10, wherein the compositing module is further operable to recursively apply one or more primitive models to generate the composite model.

16. The system according to claim 15, wherein the compositing module is further operable to recursively decompose the composite model into a composite model graph comprising the primitive models and representing the federated service system.

17. The system according to claim 16, wherein the compositing module is further operable to:

define a workload model for the federated service system, wherein a root of the composite model graph represents a starting point of a workload imposed on the federated service system by an end user; and
decompose the workload recursively from a parent node to a child node.

18. A computer readable storage medium comprising computer-executable instructions for performing a method for modeling and analyzing Quality of Service (QoS) characteristics of federated cloud services in an open eco-system, the method executed by computer-executable instructions comprising:

identifying a plurality of system entities of a federated service system;
classifying each of the system entities to provide a plurality of entity classifications;
identifying a plurality of inter-entity relationships of the system entities;
classifying each of the inter-entity relationships as a primitive model to provide a plurality of inter-entity relationship classifications; and
generating a composite model of the federated service system comprising the system entities, the entity classifications, the inter-entity relationships, and the inter-entity relationship classifications.

19. The computer readable storage medium according to claim 18, further comprising computer-executable instructions comprising recursively applying one or more primitive models to provide the composite model.

20. The computer readable storage medium according to claim 18, further comprising computer-executable instructions comprising calculating QoS characteristics by applying an evaluation and derivation method to the composite model.

FIG. 1

FIG. 2

FIG. 3

FIG. 4

FIG. 5

FIG. 6

EP 2 544 135 A1

700

702 — PROCESSOR MODULE

704 — MEMORY MODULE

706 — SYSTEM ENTITY IDENTIFICATION MODULE

708 — CLASSIFICATION MODULE

716

710 — INTER-ENTITY RELATIONSHIP IDENTIFICATION MODULE

712 — COMPOSITING MODULE

714 — REPORTING MODULE

718 — INTERNET

720 — EVALUATION AND DERIVATION MODULE

*FIG. 7*

```
                                                          ⌐800

802 ┌─────────────────────────────────────────────┐
    │  IDENTIFY A PLURALITY OF SYSTEM ENTITIES OF A │
    │           FEDERATED SERVICE SYSTEM            │
    └─────────────────────────────────────────────┘
                          │
                          ▼
804 ┌─────────────────────────────────────────────┐
    │ CLASSIFY EACH OF THE SYSTEM ENTITIES TO PROVIDE A │
    │       PLURALITY OF ENTITY CLASSIFICATIONS     │
    └─────────────────────────────────────────────┘
                          │
                          ▼
806 ┌─────────────────────────────────────────────┐
    │ IDENTIFY INTER-ENTITY RELATIONSHIPS OF THE SYSTEM │
    │                   ENTITIES                    │
    └─────────────────────────────────────────────┘
                          │
                          ▼
808 ┌─────────────────────────────────────────────┐
    │ CLASSIFY EACH OF THE INTER-ENTITY RELATIONSHIPS AS │
    │ A PRIMATIVE MODEL TO PROVIDE A PLURALITY OF INTER- │
    │        ENTITY RELATIONSHIP CLASSIFICATIONS    │
    └─────────────────────────────────────────────┘
                          │
                          ▼
810 ┌─────────────────────────────────────────────┐
    │ RECURSIVELY APPLY PRIMITIVE MODELS TO THE FEDERATED │
    │    SERVICE SYSTEM TO PROVIDE A COMPOSITE MODEL │
    └─────────────────────────────────────────────┘
                          │
                          ▼
812 ┌─────────────────────────────────────────────┐
    │ GENERATE THE COMPOSITE MODEL OF THE FEDERATED │
    │ SERVICE SYSTEM COMPRISING THE SYSTEM ENTITIES, THE │
    │     ENTITY CLASSIFICATIONS, THE INTER-ENTITY  │
    │  RELATIONSHIPS, AND THE INTER-ENTITY RELATIONSHIP │
    │                CLASSIFICATIONS                │
    └─────────────────────────────────────────────┘
                          │
                          ▼
                        ( A )
```

*FIG. 8*

800

(A)

814 — REPRESENT THE COMPOSITE MODEL IN XML BASED ON A PRIMITIVE MODEL XML SCHEMA SPECIFICATION TO PROVIDE AN XML COMPOSITE MODEL

816 — RECURSIVELY DECOMPOSE THE COMPOSITE MODEL INTO A COMPOSITE MODEL GRAPH COMPRISING THE PRIMITIVE MODELS AND REPRESENTING THE FEDERATED SERVICE SYSTEM

818 — DEFINE A WORKLOAD MODEL FOR AT LEAST ONE SERVICE OF THE FEDERATED SERVICE SYSTEM

820 — DECOMPOSE THE WORKLOAD RECURSIVELY FROM A PARENT NODE TO A CHILD NODE

822 — CALCULATE QoS CHARACTERISTICS BY APPLYING AN EVALUATION AND DERIVATION METHOD TO THE COMPOSITE MODEL

824 — REPORT THE QoS CHARACTERISTICS

*FIG. 8 cont.*

FIG. 9

| Europäisches Patentamt European Patent Office Office européen des brevets | **EUROPEAN SEARCH REPORT** | Application Number EP 12 17 5026 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Notice from the European Patent Office dated 1 October 2007 concerning business methods", OFFICIAL JOURNAL OF THE EUROPEAN PATENT OFFICE, EPO, MUNICH, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-20 | INV. G06Q10/06 |
|  |  |  | TECHNICAL FIELDS SEARCHED (IPC) |
|  |  |  | G06Q |

The present search report has been drawn up for all claims

| Place of search | Date of completion of the search | Examiner |
|---|---|---|
| The Hague | 19 October 2012 | De Smet, Michaël |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................
& : member of the same patent family, corresponding
   document

EPO FORM 1503 03.82 (P04C01)